Europäisches Patentamt

European Patent Office

Office européen des brevets

(19)

(11) Numéro de publication: **0 107 998**

**B1**

# (12) FASCICULE DE BREVET EUROPÉEN

(45) Date de publication du fascicule du brevet:
18.03.87

(51) Int. Cl.⁴: **H 04 Q 11/04**

(21) Numéro de dépôt: **83402012.5**

(22) Date de dépôt: **14.10.83**

(54) Autocommutateur électronique temporel numérique MIC à architecture décentralisée.

(30) Priorité: **26.10.82 FR 8217914**

(43) Date de publication de la demande:
**09.05.84 Bulletin 84/19**

(45) Mention de la délivrance du brevet:
**18.03.87 Bulletin 87/12**

(84) Etats contractants désignés:
**DE GB IT SE**

(56) Documents cité:
**EP-A-0 006 132**
**EP-A-0 015 524**
**EP-A-0 062 296**
**EP-A-0 075 247**
**FR-A-2 524 243**

**COLLOQUE INTERNATIONAL DE COMMUTATION,
21-25 septembre 1981, session 14A, papier 1, pages
1-9, Montreal, CA., M. BALLARD et al.: "Le E10.S-
TSS.5, un système de commutation numérique
polyvalent"**

(73) Titulaire: **THOMSON- CSF TELEPHONE, 146,
Boulevard de Valmy, F-92707 Colombes (FR)**

(72) Inventeur: **Lecomte, Daniel, THOMSON- CSF SCPI
173, bld Haussmann, F-75379 Paris Cedex 08 (FR)**
Inventeur: **Gibaud, Michel, THOMSON- CSF SCPI
173, bld Haussmann, F-75379 Paris Cedex 08 (FR)**

(74) Mandataire: **Weinmiller, Jürgen, Lennéstrasse 9,
D-8133 Feldafing (DE)**

EP 0 107 998 B1

LIBER, STOCKHOLM 1987

## Description

La présente invention se rapporte à un autocommutateur électronique temporel numérique MIC à architecture décentralisée.

Généralement, un autocommutateur téléphonique est constitué d'un ensemble de terminaisons, telles qu'équipements de lignes d'abonnés, joncteurs de signaux, respectivement. Il est alors nécessaire d'utiliser un réseau de connexion pour aiguiller à des instants précis les données du bus émission vers le bus réception, et permettre ainsi une conversation bidirectionnelle entre deux terminaisons. Lorsque la capacité de l'autocommutateur, en nombre de terminaisons, augmente, il est nécessaire d'augmenter d'autant la capacité du réseau de connexion.

Dans les systèmes de forte capacité tel que celui décrit dans l'article intitulé "Le E10S-TSS5, un système de commutation numérique polyvalent" référencé "Colloque international de commutation, septembre 1981, session 14A, papier 1, pages 1 à 9", on décrit un autocommutateur extensible, de grande capacité, dans lequel les terminaisons et le réseau de connexion sont gérés par un ensemble de commande composé d'un nombre modulable de processeurs centraux banalisés auxquels sont associés des processeurs centraux spécialisés notamment en raison de leurs liaisons physiques avec certains périphériques, ainsi que par des processeurs de commande répartis au niveau d'unités regroupant chacune une pluralité de terminaisons. Les unités comportent chacune une matrice de commutation permettant de relier les terminaisons et le processeur de commande qu'elles comportent au réseau de connexion.

Toutefois une telle solution est trop coûteuse pour un autocommutateur de capacité moyenne. Aussi généralement, dans de tels autocommutateurs moyens, les terminaisons ainsi que le réseau de connexion sont supervisés et contrôlés par un calculateur central habituellement constitué d'un microprocesseur, d'une mémoire de programme associée et d'une mémoire de données. Lorsque la capacité en nombre de terminaisons augmente, il est nécessaire, lorsque cela est possible, d'augmenter la puissance du calculateur central en ajoutant des processeurs, et le calculateur central fonctionne en multiprocesseur. Cette solution présente l'inconvénient de nécessiter, même pour un petit autocommutateur susceptible d'avoir une capacité augmentant ultérieurement de façon sensible, une étude de matériel et de augmentant ultérieurement de façon sensible, une étude de matériel et de logiciel prévus pour fonctionner en multiprocesseur, ce système étant d'autant plus complexe que la capacité de l'autocommutateur est élevée.

La présente invention a pour objet un autocommutateur temporel numérique MIC à puissance de calcul décentralisée permettant ainsi une augmentation progressive du nombre de terminaisons de l'autocommutateur par augmentation progressive correspondante de la puissance de calcul de façon décentralisée, et ce avec un fonctionnement monoprocesseur.

L'autocommutateur comporte classiquement un réseau de connexion relié d'une part à une unité centrale de traitement d'autre part à des groupes de terminaisons placés chacun sous la commande d'un microcontrôleur individuel de traitement de signalisation lui-même relié au réseau de connexion par jonction MIC bidirectionnelle comme les terminaisons.

Selon une caractéristique de l'invention, chaque microcontrôleur de traitement et les terminaisons qu'il commande, logés dans un même alvéole, sont reliés à une même jonction MIC bidirectionnelle et individuelle d'accès au réseau de connexion par l'intermédiaire d'un circuit de type trois états commandé par ce microcontrôleur de manière à relier ladite jonction MIC soit à ce microcontrôleur soit à une seconde jonction MIC bidirectionnelle à laquelle les terminaisons de l'alvéole sont connectées.

La présente invention sera mieux comprise à la lecture de la description détaillée d'un mode de réalisation pris comme exemple non limitatif et illustré par le dessin annexé sur lequel:
- la figure 1 est un bloc diagramme simplifié d'un autocommutateur conforme à l'invention;
- la figure 2 est un bloc diagramme de l'unité centrale de l'autocommutateur de la figure 1; et
- la figure 3 est un bloc diagramme d'un alvéole de l'autocommutateur de la figure 1.

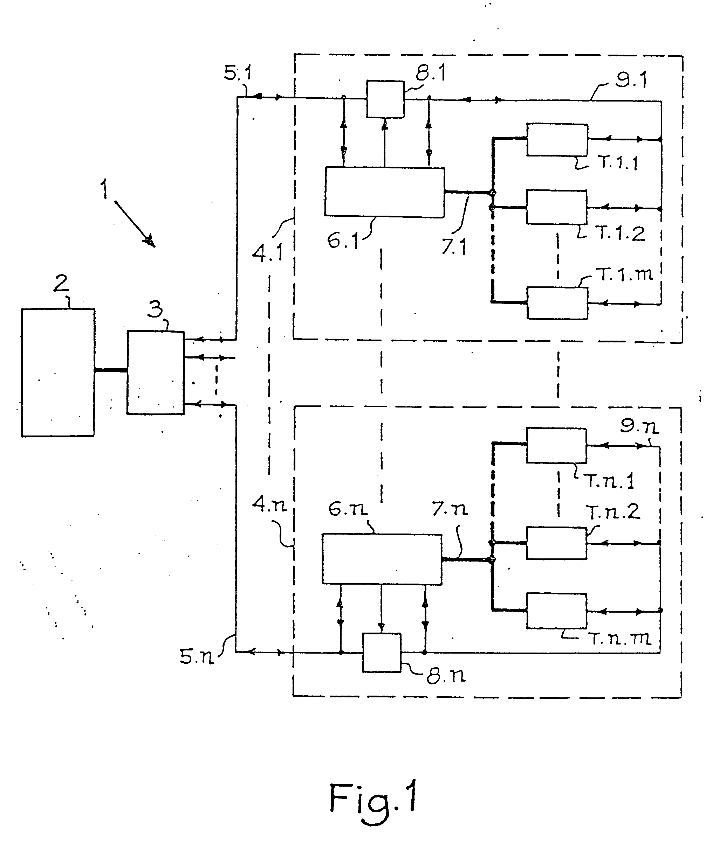

L'autocommutateur 1 représenté schématiquement sur la figure 1 est un autocommutateur privé de capacité moyenne, par exemple de quelques dizaines à environ 600 terminaisons.

L'autocommutateur 1 comporte essentiellement une unité centrale de traitement 2 commandant un réseau de connexion 3 relié à n alvéoles référencés 4.1 à 4.n. Le réseau de connexion 3 est relié aux alvéoles par n jonctions MIC bidirectionnelles référencées 5.1 à 5.n.

Chaque alvéole comporte un microcontrôleur de traitement de signalisation, respectivement référencé 6.1 à 6.n, dont la sortie de sélection d'instants d'émission et de réception est reliée par un bus, respectivement référencé 7.1 à 7.n, à m cartes de terminaisons dans chaque alvéole, ces cartes étant respectivement référencées 5.1.1 à T.1.n pour le premier alvéole jusqu'à T.n.1 à T.n.m pour l'alvéole de rang n. Dans chaque alvéole, la jonction MIC bidirectionnelle, 5.1 à 5.n, est reliée au microcontrôleur correspondant ainsi qu'à un circuit du type à trois états, respectivement référencé 8.1 à 8.n, commandé par le microcontrôleur correspondant. L'entrée et la sortie de signalisation de chaque micontrôleur 6.1 à 6.n sont reliées, dans chaque alvéole correspondant, par une jonction MIC ibidirectionnelle, respectivement référencée 9.1. à 9.n, aux circuits 8.1 à 8.n, ainsi qu'aux sorties et entrées de données et de signalisation de toutes les terminaisons de l'alvéole en question. Dans l'exemple cité ci-dessus, on a supposé que chaque alvéole comportait m cartes de terminaisons. Toutefois, il est bien entendu que les alvéoles peuvent comporter des nombres différents de cartes de terminaisons.

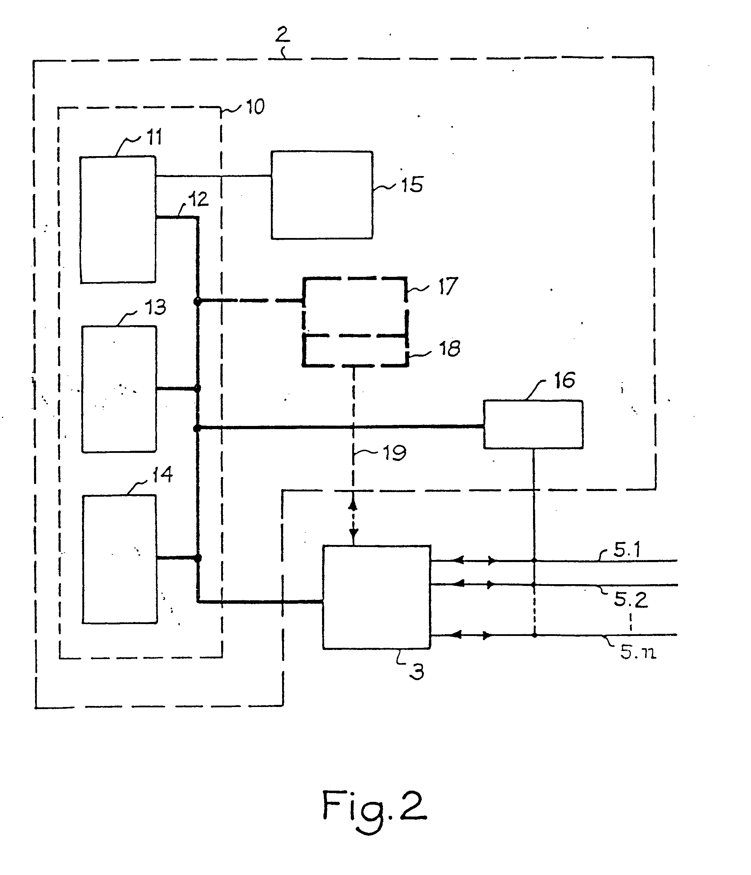

On va maintenant décrire, en référence à la figure 2, l'unité centrale de traitement référencée 2. L'unité centrale de traitement comporte un calculateur central 10 se composant essentiellement d'un microprocesseur 11 relié par un bus 12 à une mémoire 13 contenant les divers programmes téléphoniques et les programmes télématiques, et à une mémoire 14 non volatile servant à sauvegarder certaines données de fonctions propres au service téléphonique (par exemple: numéros abrégés, rappels automatiques, renvois de postes, catégories, classes de service, etc...). Le microprocesseur 11 est par ailleurs relié à un circuit d'horloge 15 permettant le synchronisme de tout l'autocommutateur 1. Le bus 12 est relié au réseau de connexion 3, et il est également relié, dans l'unité centrale 2, à un ensemble 16 de registres bidirectionnels euxmêmes reliés aux jonctions bidirectionnelles 5.1 à 5.n, de façon à lire, sous la commande du calculateur 10 certaines informations de l'ensemble des jonctions bidirectionnelles 5.1 à 5.n, et d'écrire certaines autres informations sur ces mêmes jonctions.

Selon une variante de réalisation représentée en trait discontinu sur la figure 2, l'ensemble 16 de registres peut être remplacé par une mémoire vive 17 reliée au bus 12 et coopérant avec un circuit 18 d'accès direct en mémoire relié par une jonction bidirectionnelle 19 au réseau de connexion 3.

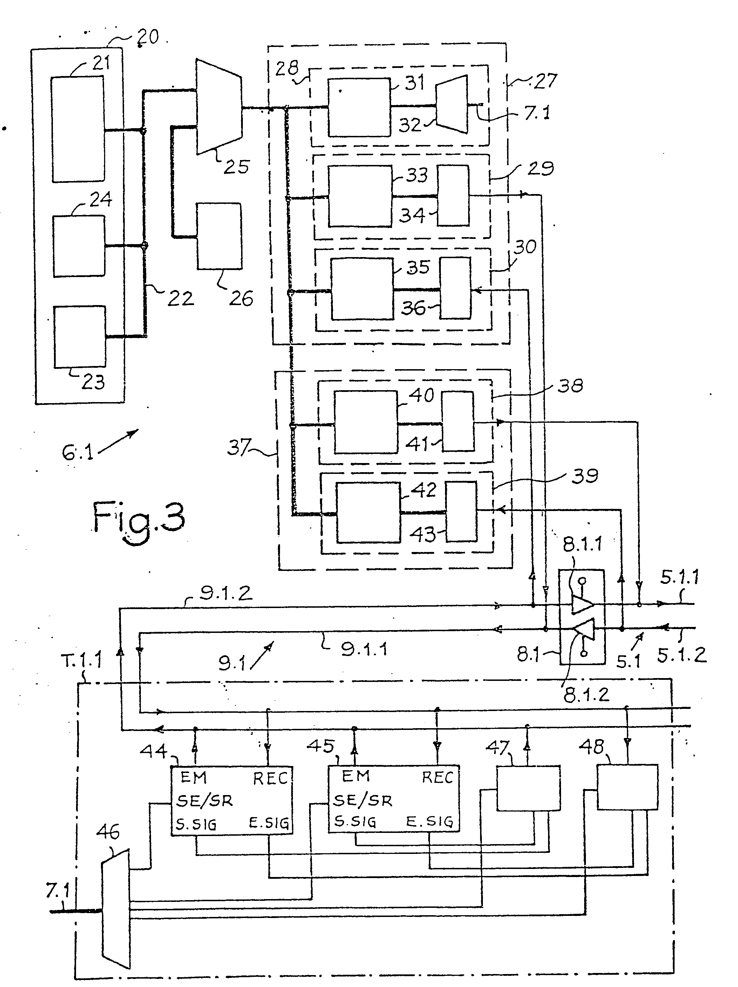

On a représenté sur la figure 3 le bloc-diagramme d'un alvéole de terminaisons, par exemple l'alvéole 4.1.

A la partie supérieure de la figure 3, on a représenté le microcontrôleur de traitement de signalisation 6.1. Le microcontrôleur 6.1 comporte un calculateur 20 se composant essentiellement d'un microprocesseur 21 relié par un bus 22 à une mémoire 23 contenant les divers programmes de signalisation et d'exploration des terminaisons de l'alvéole, et à une mémoire 24 non volatile servant à sauvegarder certaines données de fonctions propres aux terminaisons et aux intervalles de temps de la jonction MIC bidirectionnelle 5.1. Le bus 22 est relié à une entrée d'un multiplexeur 25 à deux entrées. L'autre entrée du multiplexeur 25 est reliée à un compteur 26 d'intervalle de temps. La sortie du multiplexeur 25 est reliée à l'entrée d'un circuit 27 de sélection des terminaisons. Le circuit 27 se compose d'un circuit 28 de sélection d'instants d'émission et de réception, d'un circuit 29 de transmission de signalisation en direction des terminaisons, et d'un circuit 30 de transmission de signalisation en provenance des terminaisons. Les entrées des circuits 28, 29 et 30 sont toutes reliées au bus de sortie du multiplexeur 25.

Le circuit 28 se compose d'une mémoire 31 suivie d'un démultiplexeur primaire 32. La mémoire 31 comporte, pour chaque intervalle de temps de l'alvéole de terminaisons, l'adresse de la carte et de la terminaison à sélectionner. Le démultiplexeur primaire 32 est chargé de sélectionner l'une des cartes de terminaisons T.1.1 à T.1.m, et sa sortie est reliée au bus 7.1. Le circuit 29 comprend une mémoire 33 suivie d'un registre 34 à entrées parallèles et sortie série. La mémoire 33 comporte, pour chaque intervalle de temps, les données correspondant à la signalisation à transmettre vers la terminaison dont l'adresse se trouve dans la mémoire 31. Le circuit 30 se compose d'une mémoire 35 précédée d'un registre 36 à entrée série et sorties parallèles. La mémoire 35 comporte, pour chaque intervalle de temps, les données correspondant à la signalisation en provenance de la terminaison dont l'adresse se trouve dans la mémoire 31. Les registres 34 et 36 sont reliés à la jonction bidirectionnelle 9.1. La sortie du registre 34 est reliée à la jonction unidirectionnelle 9.1.1 en direction des terminaisons, tandis que l'entrée du registre 36 est reliée à la jonction unidirectionnelle 9.1.2 en provenance des terminaisons, les jonctions 9.1.1 et 9.1.2 formant la jonction 9.1.

Le bus de sortie du multiplexeur 25 est également relié à un circuit 37 de transmission de messages entre l'alvéole de terminaisons 4.1 et le calculateur central 10. Le circuit 37 se compose d'un circuit 38 de transmission de messages de signalisation de l'alvéole de terminaisons 4.1 vers le calculateur central 10, et d'un circuit 39 de transmission de messages de signalisation du calculateur central 10 vers l'alvéole 4.1. Le circuit 38 comporte une mémoire 40 de mémorisation de messages de signalisation du microcontrôleur 20 vers le calculateur central 10. La mémoire 40 est suivie d'un registre 41 à entrées parallèles et sortie série. Le circuit 39 comporte une mémoire 42 de mémorisation des messages en provenance du calculateur central 10, cette mémoire 42 étant précédée d'un registre 43 à entrée série et sorties parallèles. Les deux mémoires 40 et 42 sont reliées au bus de sortie du multiplexeur 25, tandis que la sortie du registre 41 et l'entrée du registre 43 sont reliées à la jonction bidirectionnelle 5.1. Cette jonction bidirectionnelle 5.1 se compose d'une jonction unidirectionnelle 5.1.1 reliant la sortie du registre 41 à une entrée correspondante du réseau de connexion 3, et d'une autre jonction unidirectionnelle 5.1.2 reliant une sortie correspondante du réseau de connexion 3 à l'entrée du registre 43.

Le circuit 8.1 se compose d'un amplificateur logique à trois états 8.1.1 reliant la jonction 9.1.2 à la jonction 5.1.1, et d'un autre amplificateur logique trois états 8.1.2 reliant la jonction 5. 1.2 à la jonction 9.1.1. Les amplificateurs logiques 8.1.1 et 8.1.2 sont commandés, de façon connue en soi et non représentée, par le calculateur 20.

On relie au bus 7.1 plusieurs, par exemple seize, cartes de terminaisons telles que la carte T.1.1, seule représentée sur la figure 3, en bas de cette figure. Chaque carte de terminaisons comprend plusieurs, par exemple quatre, huit ou seize terminaisons. Sur le dessin on a représenté, pour la carte T.1.1, seulement deux terminaisons, à savoir les terminaisons référencées 44 et 45. Ces terminaisons sont des équipements de lignes d'abonnés, de joncteurs réseau, etc... Chaque carte de terminaisons telle que la carte T.1.1 comporte en outre un démultiplexeur secondaire 46 de sélection des terminaisons, un registre 47 à entrées parallèles et sortie série, et un registre 48 à entrée série et sorties parallèles. L'entrée du démultiplexeur secondaire 46 est reliée au bus 7.1, et ses différentes sorties sont reliées chacune à une entrée SE/SR de sélection de chacune des terminaisons de la carte, ainsi qu'à l'entrée de validation du registre 47 et du registre 48. Chaque terminaison comporte une entrée de signalisation E.SIG pour recevoir la signalisation en provenance du calculateur d'alvéole 20, et une sortie de signalisation S.SIG pour envoyer de la signalisation au calculateur d'alvéole 20. Chaque entrée de signalisation E.SIG est reliée à la jonction 9.1.1 par l'intermédiaire du registre 48, et chaque sortie de signalisation S.SIG est reliée à la jonction 9.1.2 par le registre 47. Chaque terminaison comporte enfin une sortie EM d'émission de données et une entrée REC de réception de données. Les sorties EM de toutes les terminaisons sont reliées à la jonction 9.1.2, et les entrées REC de toutes les terminaisons sont reliées à la jonction 9.1.1.

Lorsqu'un demandeur (poste téléphonique ou réseau) relié à l'une des terminaisons d'un alvéole veut établir une liaison avec un demandé (un autre poste téléphonique ou un autre réseau, dans la même carte ou dans une autre carte du même alvéole) relié à une autre terminaison du même alvéole, il envoie, par exemple par fermeture de boucle, sur un intervalle de temps de la jonction 9.1.2 une signalisation correspondante par la sortie S.SIG de sa terminaison au calculateur d'alvéole 20 via le registre 47 correspondant et via le registre 36 et la mémoire 35 du circuit 30 correspondant. Le calculateur 20 transmet cette demande, de la façon expliquée ci-dessous, au calculateur central 10 qui en informe, également de la façon expliquée ci-dessous, le calculateur 20 du même alvéole. Ledit calculateur 20 envoie une signalisation d'appel à l'entrée E.SIG de la terminaison du demandé via la mémoire 33, le registre 34 et le registre 48 de la carte de la terminaison du demandé. Dès que le demandé a fait savoir au calculateur 20, par une signalisation de retour, qu'il est prêt à recevoir le demandeur, le calculateur d'alvéole permet l'échange des informations MIC entre le demandeur et le demandé, pendant les intervalles de temps de la jonction 9.1. La sélection des instants d'émission et de réception se fait par activation de l'entrée SE/SR de la terminaison devant émettre et recevoir pendant l'intervalle de temps choisi de la jonction 9. 1, cette activation se faisant de la manière suivante. Le calculateur 20, ayant choisi un intervalle de temps de la jonction 9.1, écrit dans la mémoire 31 de son alvéole, à l'adresse correspondant à cet intervalle de temps, l'adresse de la terminaison qui devra émettre ses données sur la jonction 9.1.2 pendant cet intervalle de temps, et recevoir les données présentes sur la jonction 9.1.1 pendant ce même intervalle de temps. La mémoire 31 délivre donc l'adresse de la terminaison sélectionnée, cette adresse étant validée par le compteur 26 d'intervalles de temps qui valide aussi sur le même intervalle de temps de la jonction 9.1 les informations relatives à la terminaison sélectionnée. Bien entendu, le multiplexeur 25 fonctionne en synchronisme avec l'horloge centrale 15 de l'autocommutateur, de façon à laisser passer alternativement les informations émises par le calculateur 20 sur le bus 22 et les informations venant du compteur 26. L'adresse de la terminaison sélectionnée comprend la sous-adresse de la carte dans laquelle se trouve cette terminaison, et la sous-adresse de la terminaison en question à l'intérieur de la carte. La première sous-adresse est traitée par le démultiplexeur primaire 32, et la seconde par le démultiplexeur secondaire 46 de la carte en question. L'adresse de la terminaison sélectionnée comprend également une information du type "données MIC" ou "signalisation" afin d'indiquer au démultiplexeur 46 de sélection soit les entrées-sorties de données REC-EM soit les entrées-sorties de signalisation E.SIG-S.SIG à travers les registres 48 et 47.

Pour établir une conversation (ou échange de données, de façon plus générale) bidirectionnelle entre deux terminaisons, par exemple les termimaisons 44 et 45, il faut utiliser deux intervalles de temps de la jonction 9.1. Le premier intervalle de temps est sélectionné pour la terminaison 44 et le second pour la terminaison 45. La sortie EM de la terminaison 44 émet ses données sur ledit premier intervalle de temps de la jonction 9.1.2, ces données sont transmises par l'intermédiaire de la jonction 5.1.1 sur la jonction 9.1.1 pendant le deuxième intervalle de temps pour être reçues par l'entrée REC de la terminaison 45. C'est par l'intermédiaire du réseau de connexion 3 que se fait la correspondance entre le premier intervalle de temps de la jonction 9.1.2 et le deuxième intervalle de temps de la jonction 9.1.1 sous le contrôle du calculateur central 10. Pour cela, il aura fallu au préalable informer le processeur central 10 de mettre en correspondance ledit premier intervalle de temps de la jonction 9.1.2 avec ledit deuxième intervalle de temps de la jonction 9.1.1. A cet effet, le calculateur 20 de l'alvéole contenant les terminaisons en question aura envoyé un message au calculateur 10 par l'intermédiaire du circuit 38 en utilisant l'intervalle de temps de signalisation de la jonction 5.1. De façon avantageuse, l'intervalle de temps de signalisation de la jonction 5.1 est l'intervalle de temps numéro 16, comme cela est le cas avec les jonctions MIC normalisées. Le message en question est envoyé par le calculateur 20 dans la mémoire 40, et il est vidé dans le registre 41 au moment voulu pour être envoyé sur la jonction 5.1.1. Ce message est alors recueilli par le registre 16 (ou bien est envoyé dans la mémoire vive 17 dans le cas de la variante de réalisation précitée), ledit registre 16 collectant toutes les informations se trouvant sur les intervalles de temps de signalisation numéro 16 des jonctions 5.1 à 5.n. En retour, le calculateur central 10 émet un message vers le calculateur 20 en question pour lui signifier que la correspondance entre lesdits intervalles de temps est bien réalisée. Ce message est transmis, via le registre 16, à la jonction 5.1.2. Ce message de retour est collecté par le registre 43 et mémorisé par la mémoire 42 qui est lue par le microprocesseur 21. De même, la sortie EM de la terminaison 45 émet ses données sur ledit deuxième intervalle de temps de la jonction 9.1.2, ces données étant transmises par l'intermédiaire de la jonction 5.1.1 sur la jonction 9.1.1 pendant le premier intervalle de temps grâce au réseau de connexion 3 qui met en relation ledit deuxième intervalle de temps de la jonction 9.1.1 avec le premier intervalle de temps de la jonction 9.1.2.

Si le demandé appartient à un alvéole de terminaisons différent de l'alvéole de terminaisons du demandeur, le calculateur 20 demande, sous forme de message transmis au calculateur central 10, par l'intermédiaire de l'intervalle de temps de signalisation numéro 16 de la jonction telle que la jonction 5.1, d'informer le second calculateur 20 de l'alvéole de terminaisons dont dépend le demandé qu'il est appelé par le demandeur en question. Pour cela, le calculateur central 10 émet un message vers ledit second calculateur 20 afin que ce dernier envoie une signalisation d'appel à l'entrée S.SIG de la terminaison du demandé après avoir choisi un intervalle de temps de la jonction 9.1 du second alvéole. Dès que le demandé a fait savoir au second calculateur 20 par une signalisation de retour qu'il est prêt à recevoir le demandeur, ce second calculateur 20 en informe le calculateur central 10 qui, lui même, informe le calculateur 20 du demandeur. Chaque calculateur 20 d'alvéole de terminaisons ayant chacun choisi un intervalle de temps, le calculateur central 10 met en correspondance lesdits deux intervalles de temps par l'intermédiaire du réseau de connexion 3.

Dans un mode de réalisation préféré de l'invention chaque calculateur 20 peut contrôler deux jonctions MIC telles que la jonction 9.1, en échangeant de la signalisation sur l'intervalle de temps de signalisation qui est dans le cas présent, l'intervalle de temps numéro 16. Dans le cas de jonctions MIC fonctionnant à 2,048 Mbits/s, chacune des deux jonctions contrôlées par le calculateur 20 peut être reliée à trente réseaux avec un trafic de 1 Erlang ou bien cent postes d'abonnés avec un trafic de 0,2 Erlang et 1% de perte. Chaque alvéole de terminaisons permet ainsi de recevoir soixante réseaux avec un trafic de 1 Erlang ou bien deux cents postes avec un trafic de 0,2 Erlang, ou bien toute autre valeur intermédiaire de mélange de réseaux et de postes.

Le calculateur central 10 dialogue, par échange de messages avec les différents calculateurs d'alvéoles tels que le calculateur 20 par l'intermédiaire du réseau de connexion 3 et des différentes jonctions reliant les alvéoles à ce réseau de connexion. Dans le mode de réalisation préféré de l'invention, on utilise un réseau de connexion à huit jonctions entrantes et huit jonctions sortantes qui permet de connecter jusqu'à quatre alvéoles de terminaisons.

Le trafic d'échange de signalisation entre les terminaisons et le microcalculateur 20 de chaque alvéole augmente de façon sensiblement proportionnelle avec le nombre de terminaisons, mais il n'en est pas de même du trafic d'échange de messages entre le calculateur central 10 et les différents microcalculateurs d'alvéoles, ce trafic restant généralement très faible. L'avantage de la solution de la présente invention est que tout le trafic "téléphonique" (c'est-à-dire les ordres de commutation élaborés par le calculateur central 10 et envoyés sous forme de messages aux différents calculateurs tels que le calculateur 20) se trouve traité par un seul processeur central, alors que le trafic d'échange de signalisation est réparti sur plusieurs processeurs spécialisés, tels que le calculateur 20, dont le nombre est fonction du nombre de terminaisons. De plus, les programmes de traitement de signalisation occupant un volume mémoire faible, leur duplication n'entraîne pas une élévation du prix de revient, alors que les programmes téléphoniques occupent un grand volume mémoire (plusieurs dizaines à plusieurs centaines de milliers d'instructions) et ne sont jamais dupliqués dans le mode de réalisation préféré décrit ci-dessus, alors que dans des systèmes multiprocesseurs, il est souvent nécessaire de les dupliquer afin de minimiser le trafic d'informations sur le bus commun aux différents processeurs.

La capacité de l'autocommutateur conforme à l'invention avec un réseau de connexion 8 x 8 peut ainsi aller de 8 x 30 = 240 réseaux avec un trafic de 1 Erlang par réseau jusqu'à 8 x 100 = 800 postes d'abonnés avec un trafic de 0,2 Erlang par poste. Selon un mode de réalisation avantageux, l'autocommutateur pourrait comporter 60 réseaux et 600 postes.

**Revendications**

1/ Autocommutateur électronique temporel numérique MIC comportant un réseau de connexion (3) relié d'une part à une unité centrale de traitement (2) d'autre part à des groupes de terminaisons (T) placés chacun sous la commande d'un microcontrôleur (6) individuel de traitement de signalisation lui-même relié au réseau de connexion par jonction MIC bidirectionnelle comme les terminaisons, caractérisé en ce que chaque microcontrôleur de traitement (6) et les terminaisons (T) qu'il commande, logés dans un même alvéole (4), sont reliés à une même jonction MIC (5), bidirectionnelle et individuelle d'accès au réseau de connexion par, l'intermédiaire d'un circuit de type trois états (8) commandé par ce microcontrôleur de traitement de manière à relier ladite jonction MIC (5), soit à ce microcontrôleur, soit à une seconde jonction MIC bidirectionnelle (9) à laquelle les terminaisons de l'alvéole sont connectées.

2/ Autocommutateur selon la revendication 1, caractérisé par le fait que l'unité centrale de traitement (2) comporte des registres bidirectionnels (16) reliés à toutes les jonctions bidirectionnelles elles-mêmes reliées au réseau de connexion (3).

3/ Autocommutateur selon la revendication 1, caractérisé par le fait que chaque microcontrôleur de signalisation comporte un calculateur (20) relié par l'intermédiaire d'un multiplexeur (25) et en parallèle avec un compteur d'intervalle de temps (26), à un circuit (28) de sélection d'instants d'émission et de réception, à un circuit (29) de transmission de signalisation en direction des terminaisons, à un circuit (30) de transmission de signalisation en provenance des terminaisons, à un circuit (38) de transmission de messages de signalisation en direction de l'unité centrale de traitement, et à un circuit (39) de transmission dde messages de signalisation en provenance de l'unité centrale de traitement.

4/ Autocommutateur selon la revendication 3, caractérisé par le fait que le circuit de sélection d'instants d'émission et de réception se compose d'une mémoire (31) comportant, pour chaque intervalle de temps de son alvéole, l'adresse de la carte et de la terminaison à sélectionner, cette mémoire étant suivie d'un démultiplexeur primaire (32) de sélection de cartes de terminaisons.

5/ Autocommutateur selon la revendication 3, caractérisé par le fait que chacun des circuits de transmission de signalisation et de messages comporte une mémoire vive (33, 35, 40, 42) et un registre série-parallèle ou parallèle-série (34, 36, 41, 43).

6/ Autocommutateur selon la revendication 3, caractérisé par le fait que chaque carte de terminaisons comporte un démultiplexeur secondaire (46), plusieurs terminaisons (44, 45), un registre parallèle-série (47), et un registre série-parallèle (48), les sorties du démultiplexeur secondaire étant reliées aux entrées de sélection d'émission-réception des terminaisons (SE/SR), ainsi qu'aux deux registres précités, les sorties d'émission de données (EM), et les entrées de réception de données (REC) de toutes les terminaisons, ainsi que la sortie série du premier registre précité et l'entrée série du second registre précité étant reliées à la jonction MIC (9.1) commune à l'alvéole et elle-même reliée aux circuits de transmission de signalisation (29, 30) du microcontrôleur de l'alvéole, les entrées et sorties de signalisation (S.SIG, E.SIG) de toutes les terminaisons étant reliées respectivement aux entrées parallèles du premier registre précité (47) et aux sorties parallèles du second registre précité (48).

**Patentansprüche**

1. Elektronische digitale PCM-Zeitschaltselbstwählanlage mit einem Vermittlungsnetz (3), das einerseits an eine zentrale Verarbeitungseinheit (2) und andererseits an Gruppen von Endleitungen (T) angeschlossen ist, die je von einem eigenen Mikrokontrollgerät (6) zur Bearbeitung der Signalisation gesteuert wird, wobei dieses Gerät seinerseits an das Vermittlungsnetz über bidirektionale PCM-Verbindungen gleich den Endleitungen angeschlossen ist, dadurch gekennzeichnet, daß jedes Bearbeitungs-Mikrokontrollgerät (6) und die von ihm gesteuerten Endleitungen (T), die in einem gemeinsamen Einschub (4) angeordnet sind, an eine gemeinsame bidirektionale und individuelle PCM-Verbindung (5) als Zugang zum Vermittlungsnetz über einen vom Bearbeitungs-Mikrokontrollgerät gesteuerten Schaltkreis vom Dreizustandstyp (8) angeschlossen sind, so daß die PCM-Verbindung (5) entweder an dieses Mikrokontrollgerät oder an eine zweite bidirektionale PCM-Verbindung (9) angeschlossen wird, mit der die Endleitungen des Einschubs verbunden sind.

2. Selbstwählanlage nach Anspruch 1, dadurch gekennzeichnet, daß die zentrale Verarbeitungseinheit (2) bidirektionale Register (16) enthält, die an alle bidirektionalen Verbindungen, die ihrerseits mit dem Vermittlungsnetz (3) verbunden sind, angeschlossen sind.

3. Selbstwählanlage nach Anspruch 1, dadurch gekennzeichnet, daß jedes Signalisations-Mikrokontrollgerät einen Rechner (20) aufweist, der über einen Multiplexer (25) und parallel mit einem Zeitintervallzähler (26) an einen Schaltkreis (28) zur Selektion der Sende- und Empfangszeitpunkte, an einen Schaltkreis (29) zur Übertragung der Signalisation in Richtung auf die Endleitungen, an einen Schaltkreis (30) zur Übertragung der von den Endleitungen kommenden Signalisation, an einen Schaltkreis (38) zur Übertragung von Signalisationsnachrichten in Richtung auf die zentrale Verarbeitungseinheit und an einen Schaltkreis (39) angeschlossen ist, der der Übertragung von Signalisationsnachrichten dient, die von der zentralen Verarbeitungseinheit kommen.

4. Selbstwählanlage nach Anspruch 3, dadurch gekennzeichnet, daß der Schaltkreis zur Selektion der Sende- und Empfangszeitpunkte einen Speicher (31) aufweist, der für jedes Zeitintervall seines Einschubs die Adresse der auszuwählenden Karte und der auszuwählenden Endleitung enthält und von einem primären Demultiplexer (32) zur Selektion von Endleitungskarten gefolgt ist.

5. Selbstwählanlage nach Anspruch 3, dadurch gekennzeichnet, daß jeder der Schaltkreise zur Übertragung von Signalisation und Nachrichten ein Aktivspeicher (33, 35, 40, 42) und ein Serien-Parallel- oder Parallel-Serien-Register (34, 36, 41, 43) aufweist.

6. Selbstwählanlage nach Anspruch 3, dadurch gekennzeichnet, daß jede Endleitungskarte einen Sekundärdemultiplexer (46), mehrere Endleitungen (44, 45), ein Parallel-Serien-Register (47) und ein Serien-Parallel-Register (48) aufweist, wobei die Ausgänge des Sekundärdemultiplexers an die Sende-Empfangsselektionseingänge der Endleitungen (SE/SR) sowie·an die beiden genannten Register angeschlossen sind, während die Ausgänge zur Datenaussendung (EM) und die Eingänge zum Datenempfang (REC) aller Endleitungen sowie der Serienausgang des ersten genannten Registers und der Serieneingang des zweiten genannten Registers an die PCM-Verbindung (9.1) angeschlossen sind, die diesem Einschub zugeordnet ist und ihrerseits an die Schaltkreise zur Signalisationsübertragung (29, 30) des Mikrokontrollgeräts des Einschubs angeschlossen ist, wobei die Signalisationsein- und -ausgänge (S.SIG, E.SIG) aller Endleitungen an die parallelen Eingänge des erstgenannten Registers (47) bzw. an die parallelen Ausgänge des zweitgenannten Registers (48) angeschlossen sind.

**Claims**

1. An electronic digital PCM time division exchange comprising a switching network (3) connected on the one hand to a central processing unit (2) and on the other hand to groups of terminals (T) each one subjected to the control by a individual microcontroller (6) for processing the signalisation, the latter being connected to the switching network via bidirectional PCM junctions such as the terminals, characterized in that each processing microcontroller (6) and the terminals (T) which are controlled by said microcontroller are located in the same rack (4), are connected to the same bidirectional and individual PCM junction (5) giving access to the switching network via a circuit of the three state type (8) controlled by this processing microcontroller in such a way that said PCM junction (5) is connected either to this microcontroller or to a second bidirectional junction (9) to which the terminals of the rack are connected.

2. An exchange according to claim 1, characterized in that the central processing unit (2) comprises bidirectional registers (16) connected to all the bidirectional junctions which themselves are connected to the switching network (3).

3. An exchange according to claim 1, characterized in that each signalisation microcontroller comprises a computer (20) connected via a multiplexer (25) and parallelly with a time interval counter (26), to a circuit (28) for selecting the transmission and reception instants, to a circuit (29) for transmitting the signalisation towards the terminals, to a circuit (30) for transmitting the signalisation coming from the terminals, to a circuit (38) for transmitting signalisation messages towards the central processing unit and to a circuit (39) for transmitting signalisation messages coming from the central processing unit.

4. An exchange according to claim 3, characterized in that the circuit for selecting the transmission and reception instants includes a memory (31) comprising, for each time interval of its rack, the address of the card and of the terminal to be selected, this memory being followed by a primary demultiplexer (32) for selecting the cards of terminals.

5. An exchange according to claim 3, characterized in that each one of the signalisation and message transmission circuits comprises an active memory (33, 35, 40, 42) and a series-parallel or parallel-series register (34, 36, 41, 43).

6. An exchange according to claim 3, characterized in that each card of terminals comprises a secondary demultiplexer (46), a plurality of terminals (44, 45), a parallel-series register (47) and a series-parallel register (48), the outputs of the secondary demultiplexer being connected to the inputs of the terminals (SE/SR) for selecting the transmission-reception, as well as to both said registers, the data transmission outputs (EM) and the data reception inputs (REC) of all the terminals as well as the series output of said first register and the series input of said second register being connected to the PCM junction (9.1) which is common to the rack and which is itself connected to the signalisation transmission circuit (29, 30) of the microcontroller of the rack, the signalisation inputs and outputs (S.SIG, E.SIG) of all the terminals being respectively connected to the parallel inputs of said first register (47) and to the parallel outputs of said second register (48).

Fig.1

**0 107 998**

Fig.2

Fig.3